Europäisches Patentamt

European Patent Office

Office européen des brevets

(19)

(11) Veröffentlichungsnummer: **0 221 297**
**B1**

(12) **EUROPÄISCHE PATENTSCHRIFT**

(45) Veröffentlichungstag der Patentschrift:
**05.07.89**

(51) Int. Cl.⁴: **B60R 22/20**

(21) Anmeldenummer: **86112623.3**

(22) Anmeldetag: **12.09.86**

(54) **Vorrichtung zur Höhenverstellung eines oberen Verankerungs- bzw. Umlenkteiles einer Sicherheitsgurteinrichtung entsprechend der Stellung eines Fahrzeugsitzes.**

(30) Priorität: **07.11.85 DE 3539399**

(43) Veröffentlichungstag der Anmeldung:
**13.05.87 Patentblatt 87/20**

(45) Bekanntmachung des Hinweises auf die Patenterteilung:
**05.07.89 Patentblatt 89/27**

(84) Benannte Vertragsstaaten:
**DE FR GB IT SE**

(56) Entgegenhaltungen:
**EP-A- 0 153 735**
**DE-A- 2 622 556**
**DE-A- 2 625 417**
**DE-A- 2 704 811**
**GB-A- 2 027 333**

(73) Patentinhaber: **BAYERISCHE MOTOREN WERKE Aktiengesellschaft, Postfach 40 02 40 Petuelring 130 - AJ-36, D-8000 München 40(DE)**

(72) Erfinder: **Hochmuth, Karl-Heinz, Ostpreussenstrasse 10, D-8057 Eching(DE)**

(74) Vertreter: **Dexheimer, Rolf, Bayerische Motoren Werke Aktiengesellschaft Postfach 40 02 40 Petuelring 130 - AJ-31, D-8000 München 40(DE)**

## Beschreibung

Vorrichtung zur Höhenverstellung eines oberen Verankerungs- bzw. Umlenkteiles einer Sicherheitsgurteinrichtung entsprechend der Stellung eines Fahrzeugsitzes.

Die Erfindung betrifft eine Vorrichtung zur Höhenverstellung eines oberen Verankerungs- bzw. Umlenkteiles einer Sicherheitsgurteinrichtung entsprechend der Stellung eines Fahrzeugsitzes, mit den im Oberbegriff des Patentanspruchs 1 angegebenen Merkmalen.

Eine derartige Vorrichtung ist bereits durch die DE-A1 2 625 417 bekannt, wobei in einer Ausführung der Geberzylinder horizontal in Verschieberichtung des Fahrzeugsitzes angeordnet und die in dem Geberzylinder verschiebbare Kolbenstange an ihrem äusseren Ende mit dem Fahrzeugsitz verbunden ist.

Der Erfindung liegt die Aufgabe zugrunde, eine Vorrichtung zur Höhenverstellung eines oberen Verankerungs- bzw. Umlenkteiles nach dem Oberbegriff des Hauptanspruchs anzugeben, die einen optimalen Gurtbandverlauf in allen Sitzpositionen eines wenigstens längsverstellbaren Fahrzeugsitzes ermöglicht und die eine Falscheinstellung durch den Sitzbenutzer ausschliesst. Ausserdem soll die Vorrichtung einen einfachen Aufbau und ein geringes Bauvolumen aufweisen.

Diese Aufgabe ist dadurch gelöst, dass die Achse der Kolbenstange etwa senkrecht zu dem Verschiebeweg des Fahrzeugsitzes verläuft und die Kolbenstange bei der Sitzlängseinstellung mit der Führungsbahn zusammenwirkt. Besonders vorteilhaft ist, dass der Verstellweg der Kolbenstange im Geberzylinder klein gehalten und durch entsprechende Wahl der Kolbenquerschnittsflächen auf die im Nehmerzylinder verschiebbare Einstellstange übersetzt werden kann. Ausserdem kann die Führungsbahn einen beliebigen, den genaueren Zusammenhang der Höhenverstellung des oberen Verankerungs- bzw. Umlenkteiles und der Sitzlängsverstellung berücksichtigenden Verlauf aufweisen, so dass gegenüber den bisher bekannten Ausführungen eine genauere Anpassung des Gurtbandverlaufes an die Sitzlängslage bzw. an den Sitzbenutzer möglich ist. Durch die zur Verschieberichtung des Fahrzeugsitzes etwa senkrechte Anordnung der Achse des Geberzylinders schränkt dieser den Fahrzeuginnenraum kaum ein.

Vorteilhafte Ausgestaltungen der Erfindung sind Gegenstand von Unteransprüchen.

Ein Ausführungsbeispiel der Erfindung wird anhand einer Zeichnung näher erläutert. Diese gibt eine schematische Seitenansicht der erfindungsgemäßen Vorrichtung an einem längsverstellbaren Fahrzeugsitz.

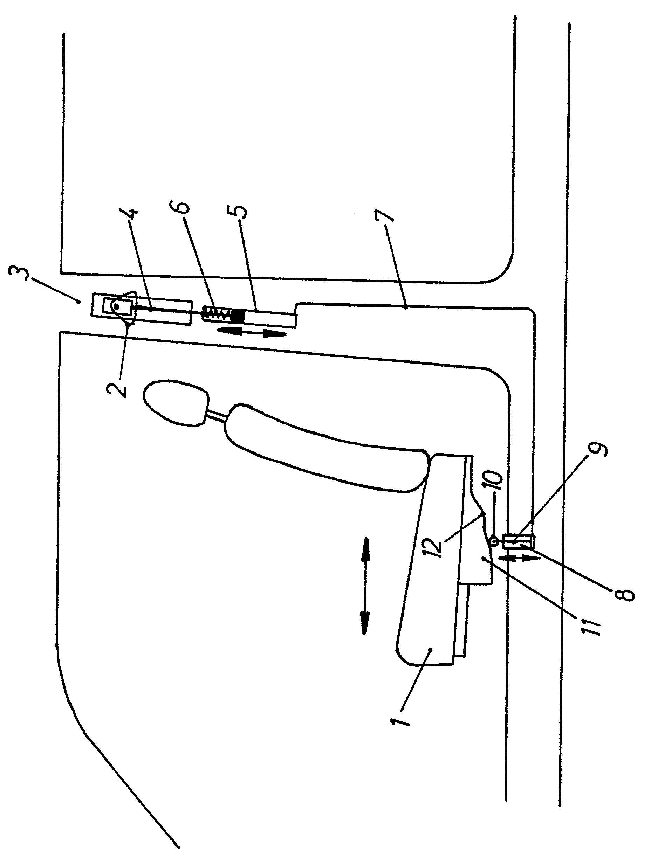

In der Zeichnung ist ein längsverstellbarer Fahrzeugsitz 1 dargestellt, der mit einer Sicherheitsgurteinrichtung versehen ist. Um in allen Sitzpositionen einen optimalen Gurtbandverlauf zu ermöglichen, ist das obere Verankerungs- bzw. Umlenkteil 2 der Sicherheitsgurteinrichtung an der Innenseite der seitlichen Karosseriemittelsäule 3 in der Höhe verstellbar angeordnet. Das Verankerungs- bzw. Umlenkteil 2 ist mit dem vorstehenden Ende einer Einstellstange 4 verbunden, die in einem Nehmerzylinder 5 gegen die Kraft einer Druckfeder 6 in die Ausfahrstellung verlagerbar ist. Der Nehmerzylinder 5 ist über eine Hydraulikleitung 7 mit einem an der Seite des Fahrzeugsitzes 1 karosseriefest angeordneten Geberzylinder 8 verbunden, in dem eine vorstehende Kolbenstange 9 etwa vertikal verschiebbar ist. An dem oberen freien Ende der Kolbenstange 9 ist eine Führungsrolle 10 um eine Querachse drehbar befestigt. Weiterhin ist an der Seite des Fahrzeugsitzes 1 eine Führungsplatte 11 befestigt, die nach unten absteht. Die Führungsplatte 11 weist an ihrer Unterseite einen abgebogenen Rand auf, der als Führungsbahn ausgebildet ist und an der sich die Führungsrolle 10 abstützt.

Wird der Fahrzeugsitz 1 in Längsrichtung in eine gewünschte Sitzposition verstellt, so wird die Kolbenstange 9 im Geberzylinder 8 entsprechend dem vorgebbaren Verlauf der Führungsbahn 12 verlagert. Da die Druckräume des Geberzylinders 8 und des Nehmerzylinders 5 über eine Hydraulikleitung 7 verbunden sind, in der sich eine nahezu inkompressible Hydraulikflüssigkeit befindet, wird bei einer Verlagerung der Kolbenstange 9 auch die Einstellstange 4 verstellt. Die Leitungsanschlüsse sind dabei so gewählt, daß ein Einfahren der Kolbenstange 9 ein Ausfahren der Einstellstange 4 bewirkt. Ein Anliegen der Führungsrolle 10 an der Führungsbahn 12 wird durch die Druckfeder 6 im Nehmerzylinder 5 erreicht, die die Einstellstange 4 in die eingefahrene Stellung belastet und die über die Hydraulikleitung 7 einen entsprechenden Druck auf die Kolbenstange 9 ausübt.

Die Erfindung ist keineswegs auf das Ausführungsbeispiel beschränkt. Es sind vielmehr im Rahmen der Patenansprüche auch andere Ausführungen möglich. Die Führungsplatte kann horizontal oder in eine andere Richtung abstehend mit dem Fahrzeugsitz verbunden sein. Ebenso kann die Führungsbahn auch im Inneren der Führungsplatte durch einen Führungsschlitz gebildet sein, der beispielsweise von einem mit der Kolbenstange verbundenen Querbolzen oder dergleichen durchsetzt ist. Um die im Belastungsfall auf das Verankerungs- bzw. Umlenkteil einwirkenden Kräfte nicht auf den Fahrzeugsitz zu übertragen, kann eine Verriegelungseinrichtung vorgesehen sein, über die sich das Verankerungs- bzw. Umlenkteil an der seitlichen Karosseriemittelsäule abstützt.

## Patentansprüche

1. Vorrichtung zur Höhenverstellung eines oberen Verankerungs- bzw. Umlenkteiles (2) einer Sicherheitsgurteinrichtung an einem längsverstellbaren Fahrzeugsitz (1), der ein Sitzteil aufweist, an dem eine etwa in Verstellrichtung des Fahrzeugsitzes (1) verlaufende Führungsbahn (12) ausgebildet ist, die bei einer Sitzverstellung mit dem freien Ende der in einem Geberzylinder (8) axial verschiebbaren Kolbenstange (9) zusammenwirkt, die über eine Hydraulikleitung (7) die in einem Nehmerzylinder (5) verschiebbare Einstellstange (4) verstellt, die mit dem Verankerungs- bzw. Umlenkteil (2) verbunden ist, dadurch gekennzeichnet, dass die Achse der Kolbenstange (9) etwa senkrecht zu dem Verschiebeweg des Fahrzeugsitzes (1) verläuft und die Kolbenstange (9) bei der Sitzlängseinstellung mit der Führungsbahn (12) zusammenwirkt.

2. Vorrichtung nach Anspruch 1, dadurch gekennzeichnet, dass die Führungsbahn (12) an der Unterseite einer von dem Sitzteil des Fahrzeugsitzes (1) nach unten abstehenden Führungsplatte (11) ausgebildet ist und die Kolbenstange (9) etwa vertikal verlagerbar an der Führungsbahn (12) anliegt.

3. Vorrichtung nach Anspruch 1 oder 2, dadurch gekennzeichnet, daß am vorstehenden Ende der Kolbenstange (9) eine Führungsrolle (10) drehbar befestigt ist, die an der Führungsbahn (12) anliegt.

4. Vorrichtung nach Anspruch 3, dadurch gekennzeichnet, daß die Führungsplatte (11) einen abgebogenen Rand aufweist, an dem sich die Führungsrolle (10) abstützt.

**Claims**

1. Apparatus for adjusting the height of a top anchoring or guide part (2) of a safety belt system on a longitudinally adjustable vehicle seat (1) having a seat part on which a guide track (12) is formed so as to extend approximately in the direction of adjustment of the vehicle seat (1) and, when the seat is adjusted, the guide track cooperates with the free end of the piston rod (9) which is axially movable in a master cylinder (8) and, via a hydraulic line (7), adjusts a positioning piston (4) movable in a slave cylinder (5) and connected to the anchoring or guide part (2), characterised in that the axis of the piston rod (9) extends approximately perpendicular to the path of motion of the vehicle seat (1) and the piston rod (9) cooperates with the guide track (12) when the seat is longitudinally adjusted.

2. Apparatus according to claim 1, characterised in that the guide track (12) is formed on the underside of a guide plate (11) projecting downwards from the seat part of the vehicle seat (1) and the piston rod (9) is movable approximately vertically and abuts the guide track (12).

3. Apparatus according to claim 1 or 2, characterised in that a guide roller (10) is rotatably secured to the projecting end of the piston rod (9) and abuts the guide track (12).

4. A device according to claim 3, characterised in that the guide plate (11) has a bent edge at which the guide roller (10) is supported.

**Revendications**

1. Dispositif de réglage en hauteur d'un ancrage ou d'un renvoi supérieur (2) d'un système de ceinture de sécurité sur un siège de véhicule automobile (1) réglable sur la longueur, qui comporte une partie de siège sur laquelle est formée une glissière de guidage (12) s'étendant à peu près dans le sens de déplacement du véhicule automobile, qui lors d'un déplacement du siège coopère avec l'extrémité libre de la tige de piston (9) déplaçable axialement dans un maître-cylindre (8), qui déplace grâce à une conduite hydraulique (7) la tringle de positionnement (4) dans un cylindre de réception (5) qui est reliée à l'ancrage ou au renvoi (2), caractérisé en ce que l'axe de la tige de piston (9) lors d'un déplacement s'étend à peu près perpendiculairement au parcours de déplacement du siège de véhicule automobile (1) et que la tige de piston (9) lors du réglage du siège sur la longueur, coopère avec la glissière de guidage (12).

2. Dispositif selon la revendication 1, caractériseé en ce que la glissière de guidage est formée sur le côté inférieur d'une plaque de guidage (11), dirigée vers le bas à partir de la partie d'un siège de véhicule automobile et en ce que la tige de piston (9) se situe de façon à pouvoir se placer à peu près verticalement sur la glissière de guidage (12).

3. Dispositif selon la revendication 1 ou 2, caractérisé en ce qu'à l'extrémité faisant saillie de la tige de piston (9) est fixé de façon à pouvoir tourner, un rouleau de guidage se situant sur la glissière de guidage (12).

4. Dispositif selon la revendication 3, caractérisé en ce que la plaque de guidage (11) présente une bordure incurvée sur laquelle s'appuie le rouleau de guidage (10).

EP 0 221 297 B1